# EUROPEAN PATENT APPLICATION

(11) **EP 4 648 249 A1**
(43) Date of publication of application: **12.11.2025**
(21) Application number: 24174690.8
(22) Date of filing: 08.05.2024
(51) Int. Cl.: H02J 3/32, H02J 3/38, H02J 7/00, H02J 13/00

(54) **DEVICE, SYSTEM, AND METHOD FOR OPTIMISING USE OF ELECTRIC ENERGY IN A BUILDING AUTOMATION NETWORK**

(71) Applicant: Helvar Oy Ab, 02150 Espoo (FI)
(72) Inventor: Juslén, Henri, 02150 ESPOO (FI); Mörsky, Tuomo, 02150 ESPOO (FI)
(74) Representative: Papula Oy

(57) **Abstract**

A device comprises a power input (601), an energy storage interface for coupling to a re-chargeable energy storage (604), a controllable charger (605) coupled to said power input (601) and to said energy storage interface, and a power output for delivering electric energy to an actuator (606) for producing an output effect in a building automation network. A controllable driver (607) is coupled to said energy storage interface and to said power output. A data input (608) receives control information, and a control system (609) is coupled to said data input (608), to said controllable driver (607), and to said controllable charger (605). The control system (609) makes said controllable charger (605) deliver charging energy out through said energy storage interface at a variable rate selected at least on basis of control information received through said data input (608), and makes said controllable driver (607) select ways in which it draws electric energy to deliver energy through said power output, at least on basis of said control information.

## Description

### FIELD OF THE INVENTION

The invention is related to the field of controlling a building automation network, such as an intelligent lighting system for example. In particular, the invention is related to controlling a building automation network in which at least some node devices and/or subsystems may both store and consume electric energy in a controllable way.

### BACKGROUND OF THE INVENTION

Building automation networks or -systems comprise numerous electronic devices that should operate in a particular way in order to provide service to the users in a building or other region of a constructed environment. Lighting networks are commonly used as examples, because their operation is easy to explain in an enlightening way. However, the references to lighting in this text should not be construed as limiting, as the principles and solutions can be generalised to all kinds of building automation unless otherwise explicitly stated.

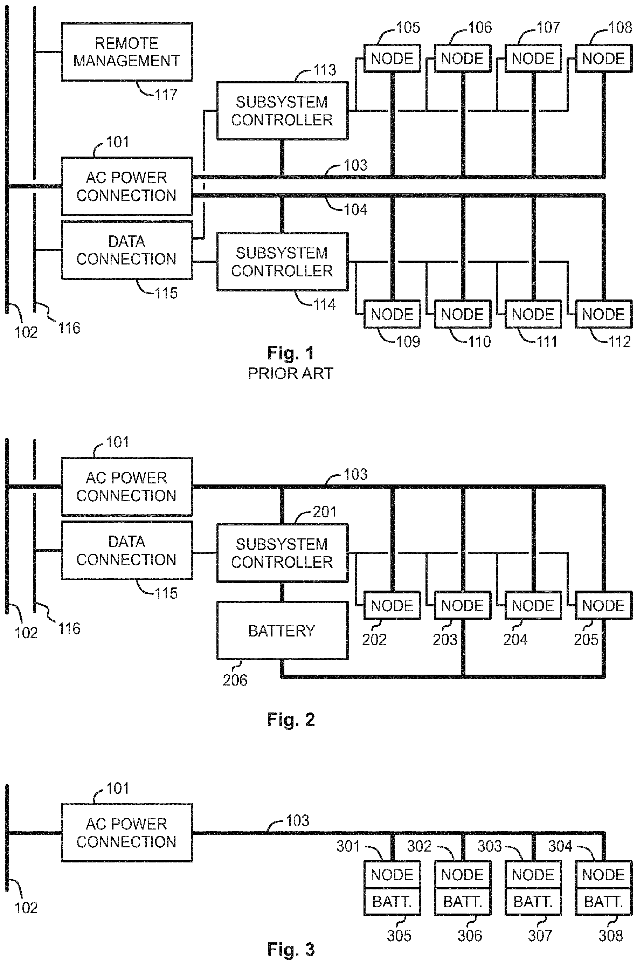

Fig. 1 illustrates an example of a building automation network. The building has a centralized connection 101 to an external AC (Alternating Current) distribution grid 102. AC wiring networks 103 and 104 inside the building distribute operating power to nodes 105 to 112 of the building automation network. The nodes may be grouped as subsystems, for example so that one subsystem is a lighting system, nodes 105 to 108 of which are luminaires, light switches, occupancy sensors, and the like. Another subsystem may be a heating, ventilation, and air conditioning (HVAC) system, nodes 109 to 112 of which are heaters, fans, cooling units, and the like.

In the example of fig. 1, each subsystem has its own subsystem controller. Assuming the examples above, the upper subsystem controller 113 in fig. 1 is a lighting controller and the lower subsystem controller 114 is an HVAC controller. The role of a subsystem controller is to establish and maintain centralized control, for example so that the lighting controller 113 receives inputs from light switches, occupancy sensors, and/or other input-generating devices and issues corresponding lighting commands to luminaires. In fig. 1 it is also assumed that the subsystems are remotely controllable, so that from each subsystem controller 113 and 114 there is a coupling to a centralized data connection point 115, through which the building is coupled to the internet 116. An authorized operator may monitor and reconfigure the operation of the subsystems through a remote management station 117.

Numerous attempts have been made to ensure that building automation networks are energy efficient. As an example, a lighting system may be configured so that lighting is provided only at locations where occupancy sensors have detected the presence of users, and only to an extent necessary, taking into account the amount of natural light that comes in through the windows. However, further progress would still be welcome in the form of intelligent utilization of energy.

### SUMMARY

It is an objective to present methods and devices that make efficient use of available resources for a building automation network in an intelligent way. Another objective is to enable using a building automation network in a role in which it supports maintaining a balance of a larger electricity distribution network. A further objective is to ensure reliable operation of a building automation network in emergency situations while not sacrificing the other beneficial objectives above.

These and other advantageous objectives are met by making nodes of a building automation network exchange and utilize information about their available resources and expected future needs and by reacting to indications about the needs of the electricity distribution network.

According to a first aspect, there is provided a device configured to operate as a node of a building automation network. The device comprises a power input for receiving electric energy from one or more external sources, an energy storage interface for coupling to a rechargeable energy storage, and a controllable charger coupled to said power input and to said energy storage interface and configured to controllably convert energy received through said power input into charging energy delivered out through said energy storage interface. The device comprises a power output for delivering electric energy to an actuator for producing an output effect in said building automation network and a controllable driver coupled to said energy storage interface and to said power output and configured to selectively draw electric energy from said energy storage interface to deliver energy through said power output. The device comprises a data input for receiving control information and a control system coupled to said data input, to said controllable driver, and to said controllable charger. The control system is configured to make said controllable charger deliver charging energy out through said energy storage interface at a variable rate selected at least on basis of control information received through said data input, and make said controllable driver select ways in which it draws electric energy to deliver energy through said power output, at least on basis of said control information.

According to an embodiment, said controllable driver is coupled to said power input independently of said controllable charger. The control system may then be configured to make said controllable driver select rates of drawing electric energy from said power input and from said energy storage interface on basis of said control information. This involves at least the advantage that the power flows between an external power source, the controllable driver, and the controllable charger can be controlled in a very flexible manner.

According to an embodiment, said control system is configured to receive, as said control information, first information indicative of time averaged supply relative to demand of electric energy in an AC grid to which said power input is coupled Said control system may then be configured to make said controllable charger deliver charging energy out through said energy storage interface at a higher rate during times when said first information indicates relatively larger supply of electric energy in said AC grid and at a lower rate during times when said first information indicates relatively smaller supply of electric energy in said AC grid. This involves at least the advantage that electric energy can be locally stored and utilized in an intelligent manner that takes into account the relative amount of electric energy available in the AC grid.

According to an embodiment, said control system is configured to receive, as said control information, second information indicative of a currently actual relative balance of renewable and non-renewable energy available at said power input. The control system may then be configured to make said controllable charger deliver charging energy out through said energy storage interface at a higher rate during times when said second information indicates relatively larger amount of renewable energy available at said power input and at a lower rate during times when said second information indicates relatively smaller amount of renewable energy available at said power input. This involves at least the advantage that electric energy can be locally stored and utilized in an intelligent manner that takes into account to what extent there is renewably electric energy available in the AC grid.

According to an embodiment, said control system is configured to receive, as said control information, third information indicative of a power-balance-dependent AC frequency in an AC grid to which said power input is coupled. The control system may then be configured to reduce a rate at which at least one of said controllable driver and said controllable charger draws electric energy in response to said third information indicating a decreasing AC frequency in said AC grid, and to increase a rate at which at least one of said controllable driver and said controllable charger draws electric energy in response to said third information indicating an increasing AC frequency in said AC grid. This involves at least the advantage of enabling operation as a power reserve of the AC grid.

According to an embodiment, said control system is configured to balance an implemented reduction or increase of the kind defined in claim 4 in the rate at which said controllable driver draws electric energy by making said controllable driver correspondingly increase or reduce a rate at which said controllable driver draws electric power from said energy storage interface. This involves at least the advantage that the operation of an actuator that receives operating power from the controllable driver can be kept unaffected or at least less affected even if changes are made in the power flows otherwise.

According to an embodiment, said control system is configured to predictively select, on basis of said control information received through said data input, an optimal time interval for the controllable charger to convert energy received through said power input into charging energy delivered out through said energy storage interface. The control system may then be configured to make said controllable charger deliver charging energy out through said energy storage interface during such a predicted optimal time interval. This involves at least the advantage that the utilization of externally available electric energy can be optimized further than if only a momentary situation would be take into account.

According to an embodiment, said controllable driver is a lighting driver configured to deliver, through said power output, current conditioned for predetermined kind of light sources. This involves at least the advantage that the benefits of the solution can be achieved in systems that are extremely widely used and thus have the advantages of large numbers, so that even relatively small achievements in individual units or systems may have a large effect in the big picture.

According to a second aspect there is provided a building automation network that comprises a plurality of devices of the kind described above, and - coupled to the energy storage interface of each of said plurality of devices - a respective rechargeable energy storage, designated in the following as the device-specific battery.

According to an embodiment, said plurality of devices are configured to exchange information indicative of a state-of-charge of their device-specific batteries. Said plurality of devices may then be configured to dynamically select among them, on basis of said exchanged information, at least one device to serve as a dedicated device responsible for emergency operation that involves using electric energy drawn from the respective device-specific battery to operate the respective actuator. This involves at least the advantage that appropriate operation in emergency situations can be ensured even if conditions that preceded the emergency situation required certain kind of power consumption in the devices.

According to an embodiment the respective control system of each of said plurality of devices is configured to always maintain a minimum state-of-charge of the respective device-specific battery, said minimum state-of-charge being defined so that it is sufficient to keep the respective actuator operating at a predefined minimum level for a predefined time. This involves at least the advantage that a certain amount of battery-powered operation can be ensured in every situation.

According to a third aspect, there is provided a building automation network that comprises a plurality of node devices constituting at least a first group, each of said node devices being configured to operate as a node of the building automation network. The building automation network comprises a first group-specific rechargeable energy storage, designated in the following as the group battery. Each node device in said first group comprises a node's power input for receiving electric energy from an external source, a node's reserve power input for coupling to said group battery, a node's power output for delivering electric energy to an actuator for producing an output effect in said building automation network, and a controllable driver coupled to said node's power input, to said node's reserve power input, and to said node's power output, and configured to selectively draw electric energy from said node's power input and/or said node's reserve power input to deliver electric energy through said node's power output. The building automation network comprises a first group-specific power input for receiving electric energy from said external source, a first group-specific energy storage interface for coupling to said group battery, and a first group-specific controllable charger coupled to said first group-specific power input and to said first group-specific energy storage interface and configured to controllably convert energy received through said first group-specific power input into charging energy delivered out through said first group-specific energy storage interface. The building automation network comprises a data input for receiving control information, and a control system coupled to said data input, to the respective controllable driver in each node device of the first group, and to said first group-specific controllable charger. The control system is configured to make said group-specific controllable charger deliver charging energy out through said first group-specific energy storage interface at a variable rate selected at least on basis of control information received through said data input, and make the respective controllable driver in each node device of the first group select rates of drawing electric energy from the respective node's power input and from the respective node's reserve power input at least on basis of said control information.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figure 1** illustrates a building automation network according to prior art,
**figure 2** illustrates a building automation network,
**figure 3** illustrates a building automation network,
**figure 4** illustrates flows of information and energy,
**figure 5** illustrates effects of various kinds of information to decisions about storing and consuming energy,
**figure 6** illustrates a device according to an embodiment,
**figure 7** illustrates a device according to an embodiment,
**figure 8** illustrates a system according to an embodiment,
**figure 9** illustrates a method,
**figure 10** illustrates a method,
**figure 11** illustrates an example of time-bound information,
**figure 12** illustrates a principle in operating as a frequency-triggered power reserve,
**figure 13** illustrates a principle in operating as a frequency-triggered power reserve,
**figure 14** illustrates illumination of a space during normal operation, and
**figure 15** illustrates illumination of a space during emergency operation.

### DETAILED DESCRIPTION

Nodes and subsystems of building automation networks with self-contained backup energy sources are known as such. In the exemplary field of lighting, emergency lighting is a well-known example.

Fig. 2 illustrates a building automation network that is capable of providing emergency lighting. As a difference to the system of fig. 1, the lighting controller 201 and some of the nodes (luminaires) 202 to 205 are qualified for use for emergency lighting purposes; here this applies to nodes 203 and 205. To this end, the lighting system of fig. 2 comprises a centralized backup battery 206, to which the luminaires 203 and 205 are also connected. In the event of a failure in the regular AC wiring network 103, the luminaires 203 and 205 switch to an emergency lighting mode in which they draw power from the battery 206. Keeping the battery 206 optimally charged under normal operation is a responsibility of a charging controller, which may be a part of the lighting controller 201 or implemented otherwise, for example as a part of the battery 206 itself or as a part of some other networked device that has suitable connections to the battery. At least some of the luminaires 202 to 205 may provide just normal illumination when the AC wiring network 103 is operating normally. Although not shown in fig. 2, there may be further subsystems, with nodes and controllers of their own, in the building automation network and they may use the same AC power connection 101 and the same data connection 115 as the subsystem shown in fig. 2. Instead of a centralized battery 206, a system otherwise like that of fig. 2 could have device-specific batteries for each (or at least some) of the emergency-qualified nodes 203 and 205. Also more elaborate backup battery arrangements are possible, in which the available power from one or more batteries can be intelligently distributed among those devices of the building automation network that need it in any particular situation.

It should be noted that while AC grids are by far the most common way of general-purpose electric energy distribution in buildings and other constructed environments, it is possible that a DC grid is used instead. For conciseness of expression, this text refers mostly to AC grids in this sense, but this is not meant to be limiting but to cover DC grids as well.

An optimal level of charge in a battery is not necessarily the full charge. For use in emergency lighting, the optimal level of charge may be some lower level that is known to suffice for keeping emergency lighting on for a required period of time, for example if the battery technology in use is one where keeping the battery constantly fully charged may shorten the useful life of the battery and/or some associated component(s).

Fig. 3 illustrates a part of a building automation network that has a dedicated emergency lighting subsystem. The nodes 301 to 304 are all dedicated emergency luminaires and they all have their own dedicated battery 305 to 308. Under normal operation of the AC wiring network 103 the emergency luminaires 301 to 304 are in standby mode, possibly providing some illumination as green-coloured, standard-conformant exit signs above doors, for example. Each of them also maintains its own battery 305 to 308 optimally charged. If the AC wiring network 103 fails, the emergency luminaires 301 to 304 switch into an emergency mode in which they provide illumination, each one of them drawing power from its own battery. Also in the case of fig. 3, the intelligence that monitors and makes decisions about the charging of the batteries 305 to 308 may be implemented in each node 301 to 304 locally and/or it may be somehow remotely located and/or distributed among several devices related to the building automation network.

In addition to the previously known ways of operation, it is possible to arrange the utilization of main and backup energy sources and the logic of providing standard-conformant emergency lighting in a more flexible and intelligent way.

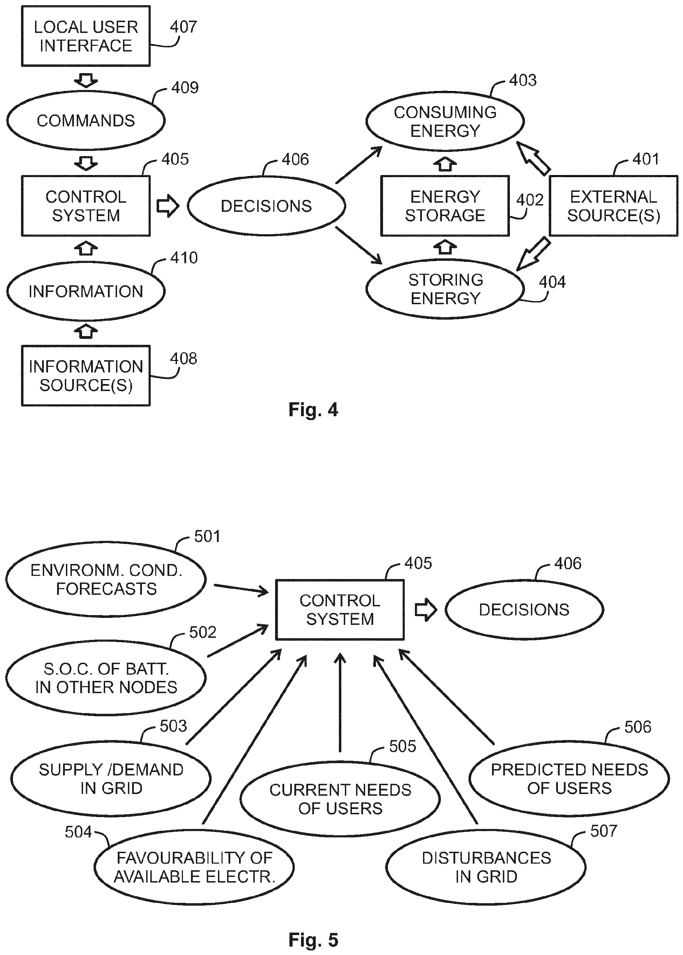

Fig. 4 illustrates an example of energy flows and information flows in a building automation network, a subsystem of a building automation network, or a node of a building automation network. To the right in fig. 4 is a block representing one or more external sources of electric energy 401. Examples of such external sources include, but are not limited to, an AC grid, a wind turbine, and an array of solar panels. Another block represents a rechargeable energy storage 402, such as a battery, a supercapacitor, a flywheel, a thermal accumulator, or any combination of one or more of these. This description does not limit the selection of external sources of energy, as also energy sources not previously known may be developed in the future.

The upper oval 403 on the right represents consuming energy, i.e. operating one or more actuators for producing an output effect in the building automation network. As an example, if an actuator involves one or more light sources, the consumption of energy 403 may mean making one or more electric currents flow through the one or more light sources for producing light. Other kinds of actuators in building automation networks have their own typical ways of consuming energy for producing an output effect. As shown with arrows in fig. 4, the energy to be consumed at 403 may be selectively drawn from the external source(s) 401, from the rechargeable energy storage 402, or from both.

The lower oval 404 on the right represents selectively storing energy into the rechargeable energy storage 402. The stored energy originates from the external source(s) 401

To the middle left in fig. 4 is a control system 405 configured to make decisions 406 concerning the consumption 403 and storing 404 of electric energy. The control system 405 may be located at the same node of the building automation network where also at least a part of the consumption 403 of energy takes place. It is possible that even the storing 404 of energy takes place at the same node. Such an approach represents a distributed resources type of architecture, in which intelligent nodes of a building automation network are largely responsible for controlling their own operation. Alternatively or additionally, at least a part of the control system 405 may be located more centrally, in a controller responsible for controlling the operation of two or more nodes of the building automation network.

To the upper and lower left in fig. 4 are shown a local user interface 407 and one or more information sources 408. Concerning the following description, the local user interface 407 is an optional feature. If present, it may offer users a possibility of giving commands 409 to the control system 405. Using again a lighting system as an example of a building automation network, the local user interface 407 may comprise one or more light switches (or corresponding functionalities implemented otherwise, like control apps executed by smart devices with communications capabilities) with which users may tell the control system 405 to switch lights on or off. More generally, if present, the local user interface 407 may comprise means available for one or more users to communicate to the control system 405, in a machine-interpretable way, their desire about how one or more nodes of the building automation network should operate.

The control system 405 may base its operation at least partly on the commands 409 received from the local user interface 407. The information sources 408 in fig. 4 represent generally all other kinds of sources of information 410 that the control system 405 may use as basis for making the decisions 406 about the consumption 403 and storing 404 of energy. The information sources 408 may be local and/or remote. Examples of local information sources include, but are not limited to, one or more memories loaded with executable, machine-interpretable instructions for execution by one or more processors in the control system 405, as well as one or more sensors configured to produce actual information about some conditions at or close to the location of the control system 405 and/or the node(s) at which the storing 404 and consumption 403 of energy are to take place.

Examples of remote information sources include, but are not limited to, sources of environmental condition information such as weather forecasts; sources of information regarding the availability and characteristics of energy provided by one or more external sources 401; sources of information indicative of detected user behaviour at other locations; state-of-charge (SOC) monitors of rechargeable energy storages other than the energy storage 402 shown in fig. 4; and others.

In general, both the commands 409 and the information 410 in fig. 4 may be considered to come to the attention of the control system 405 through a data input. Such a conceptually defined data input may in practice consist of one or more physical channels of information like wired and/or wireless couplings for communication. An essential principle in fig. 4 is that the control system 405 is configured to make decisions 406 about the storing 404, i.e. delivery, of charging energy to the energy storage 402 and about the ways in which electric energy is drawn for the purposes of consuming energy 403, i.e. delivering energy to one or more actuators through one or more power outputs, on basis of control information it received through said conceptually defined data input.

A difference to the known ways of operating emergency lighting (or other nodes of building automation networks with self-contained battery backup) is that the aim in charging the energy storage 402 is not necessarily to maintain it full (i.e. at best possible readiness for emergency operation) but to achieve the most favourable balance between energy drawn from external sources and energy drawn from the local, rechargeable energy storage 402, which favourability is evaluated based on the information that the control system 405 receives through its data input. Another way of characterising said difference is to say that the control system 405 makes and implements decisions 406 about drawing the energy currently needed for consumption 403 from either the external source(s) 401 or the energy storage 402 (also) during times when energy is, as such, available from both.

Fig. 5 illustrates examples of control information that the control system 405 may receive through its data input and use as basis for making the decisions 406. For example, in many cases electricity is available in greater amounts in commercially operated AC grids on windy days because the production in wind turbines goes up. Correspondingly, the overall demand for electric energy in AC grids increases on very cold and very hot days because more energy is needed for heating or air conditioning. In operating a building automation network, it may be advantageous to time the maxima and minima of electric power draw from an external AC grid according to indicated relatively larger or smaller supply of electric energy in said AC grid. From a technical viewpoint, this makes it easier for the grid operator to balance the operation of the AC grid, as larger contemporary consumption counteracts favourably the larger production of electric energy. From an economical viewpoint, electric energy may be cheaper to the operator of the building automation network at times when the ratio of supply to demand is larger. If the available capacity of stored energy in the energy storage 402 allows, and if an available forecast 501 of environmental conditions indicates better availability of electric energy in the AC grid within a foreseeable future, one of the decisions 406 could be to currently draw a relatively larger proportion of the energy needed for consumption 403 from the energy storage 402. Once the predicted better availability of electric energy in the AC grid materializes, another decision 406 may then follow to draw a larger amount of energy from the AC grid, both to satisfy the consumption 403 of that time and to recharge 404 the energy storage 402.

As another kind of possible control information, fig. 5 illustrates information 502 indicative of the state-of-charge of batteries in other nodes. This refers to a case in which the operation of two or more nodes of a building automation network can be coordinated to provide some common form of service to users. As an example, one may consider an indoor space with a plurality of luminaires, each with dedicated battery backup. If the system was built for emergency lighting according to prior art, only a limited subset of the luminaires would be designated for use as emergency luminaires. According to prior art, those designated luminaires should keep their batteries fully loaded at all times, in case there comes an exceptional situation where AC power is not available. If the system is operated according to the principles explained here, the luminaires may exchange information about the current availability of stored energy in the batteries of each other and make decisions 406 about their local energy flows accordingly. For example, if there is the required minimum number of luminaires in the same indoor space that have their batteries full, those luminaires may be dynamically designated as the currently dedicated emergency luminaires, while others are free to draw energy for lighting from their batteries for a period when electricity from the external AC grid is expensive.

Information 503 indicative of the balance of supply and demand in an external source like the AC grid, as well as examples of using it as a basis for the decisions 406, has been touched upon already above. Showing it as a criterion of its own emphasizes that its utilization does not necessarily need to be augmented with any kind of predictions or knowledge of future developments. As a relatively simple example, the control system 405 may react upon momentary information indicative of relatively larger or smaller supply of electric energy in the AC grid, for example in the form of openly announced dynamic pricing of electricity. The control system 405 may then control the consumption 403 and storing 404 of electric energy so that the larger or smaller rate at which electric energy is consequently drawn from the external AC grid follows logically the larger or smaller supply of electric energy in the AC grid.

Another possible form of control information shown in fig. 5 is information 504 indicative of the favourability of available electric energy. This may mean, for example, information indicative of a currently actual relative balance of renewable and non-renewable energy available at a power input. Operators of electric grids may publish such information for their clients depending on how large proportion of their current production comes from wind turbines, hydroelectric power plants, solar panel farms, and/or other more favourable sources. Additionally or alternatively, nodes of the building automation network may have the choice of drawing electric energy from an external AC grid or from a dedicated solar panel farm or wind turbine on the premises. Typical to renewable energy sources like solar and wind, the availability of produced electric energy varies a lot. The control system 405 may be configured to take advantage of a relatively large proportion of available renewable energy and favour it's use in the consumption 403 and/or the storing 404 of energy at the node of the building automation network.

Further possible forms of control information shown in fig. 5 are information 505 indicative of the current needs of users and information 506 indicative of predicted future needs of users. Information 505 indicative of the current needs of users may come from a local user interface, for example: a user may send a command to brighten or dim the lights. Information 505 indicative of the current needs may also come in some automatic form, like from a motion sensor or presence sensor that detects a user in need or from daylight-harvesting sensors that measure a total amount of light so that a cloud that drifts in front of the Sun triggers a need to brighten artificial lighting. If the control system applies a prioritization scheme in deciding, which kinds of input information is given highest importance in affecting control decisions, information indicative of current needs of users may be given a high priority because users will in any case judge the performance of the lighting system (or other building automation network) largely on the basis of how they experience their current needs to be satisfied.

Information 506 indicative of predicted needs of users may have a role in the making of decisions 406 resembling that of available forecasts 501 of environmental conditions. As an example, previously collected findings of how users typically control the lighting, or even just how they move and/or stay in artificially illuminated areas, may form a basis for predicting what would be the most probable illumination needs also in the future. Based on such previously collected findings, the control system 405 may quite reliably predict, for example, that during the early morning and late afternoon hours of each ordinary working day a lot of lights will be switched on, especially at the northern latitudes in winter when natural daylight is scarce. If, on the other hand, the control system 405 knows that electricity from the external AC grid is cheap during nights when very few people will be at the office, it may decide to make energy flow from the external source(s) 401 to the energy storage 402 during night hours and from the energy storage 402 to consumption 403 during the early morning hours.

Another possible form of control information shown in fig. 5 is information 507 indicative of disturbances in the normal operation of an external grid. If available, such information may be useful for example to make the building automation network operate as a so-called frequency-controlled power reserve of an AC grid. Every controllably operated AC grid has a nominal AC frequency, which is 50 Hz for example in Europe and 60 Hz for example in North America; for the purpose of this description the actual numeric value of the nominal AC frequency is not important. Maintaining the grid frequency at its nominal value requires maintaining an accurate balance between produced and consumed electric power. If there is an excess of produced power, the grid frequency rises above the nominal value, while in an overconsumption situation it drops below it.

If information 507 indicative of disturbances comes in the form that indicates a currently measured AC frequency in the grid, the control system 405 may react by making corresponding decisions 406. In response to said information indicating a decreasing AC frequency in the AC grid, the control system 405 may control the consumption 403 and/or storing 404 to reduce a rate at which electric energy is drawn from the AC grid. Similarly, in response to said information indicating an increasing AC frequency in the AC grid, the control system 405 may increase a rate at which electric energy is drawn from the AC grid. For example, in the latter case, the control system 405 may decide to brighten the lighting or increase the rate of ventilation even if, simultaneously, it knew or assumed (based on sensor findings, the time of the day, etc.) that there are actually no users who would currently need more light or fresh air.

Next, embodiments are described in which the resources of a building automation network are highly decentralized, so that both decision-making intelligence and the capability of locally storing energy are located in an individual node. Again, as an example, a lighting system is considered as an example of a building automation network. However, the following description is in no way limited to lighting, as the actuators driven by the node device could be others than light sources.

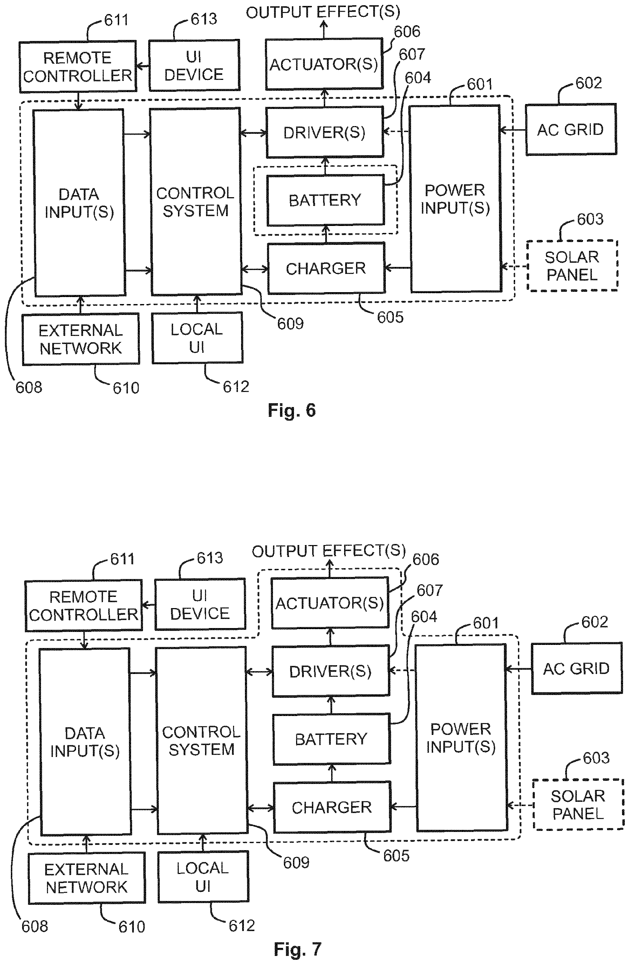

Fig. 6 illustrates a device configured to operate as a node of a building automation network. The device comprises a power input 601 for receiving electric energy from one or more external sources. As non-limiting examples of external sources, fig 6 shows an external AC grid 602 and a solar panel 603. In case there is only one external source, it is more typically the external AC grid 602, which is emphasized in fig. 6 by showing the solar panel 603 with dashed lines. In case there are two or more external sources, the power input 601 is assumed to be controllable so that in response to a control signal (not shown) it can controllably select between external sources and/or change the ratio of how large a proportion of the incoming power is taken from which source. A physical implementation of the power input 601 may comprise, for example, one or more connectors to which power cables can be connected, as well as optional circuitry such as switches, filters, rectifiers, voltage converters, circuit breakers, and/or the like.

Fig. 6 shows a battery as a rechargeable energy storage 604. As illustrated by the dashed rectangle around it, the battery is not necessarily considered to be a part of the device of fig. 6, as it can be external thereto. The device is considered to comprise an energy storage interface for coupling to a rechargeable energy storage 604. In fig. 6 the energy storage interface comprises the illustrated couplings to and from the battery. Optionally, there may be further parts of the energy storage interface such as, for example, a sensor interface through which information may be obtained about the state-of-charge and/or other properties of the rechargeable energy storage that is available.

As a slightly modified alternative embodiment, fig. 7 illustrates a device in which the rechargeable energy storage 604 is a part of the device itself. Parts shown with the same reference designators in figs. 6 and 7 serve essentially the same function, and this description is applicable to both unless otherwise explicitly stated. The concept of an energy storage interface refers to an internal interface within the device of fig. 7.

The devices of figs. 6 and 7 comprise a controllable charger 605 that is coupled to both the power input 601 and to the energy storage interface. The controllable charger 605 is configured to controllably convert energy received through the power input 601 into charging energy delivered out through the energy storage interface. As an example, the controllable charger 605 may comprise one or more rectifiers, one or more voltage converters, as well as switching and regulating circuitry with which it can be ascertained that the rechargeable energy storage 604 is always charged at appropriate voltage and current levels. In case the power input 601 did not comprise selection switches, the controllable charger 605 may be configured to controllably select the external source(s) of electric energy from which it receives energy.

The devices of figs. 6 and 7 comprise a power output for delivering electric energy to one or more actuators 606 for producing an output effect in the building automation network. In the device of fig. 7, the power output is an internal interface within the device itself. The power output is coupled to a controllable driver 607 that is also coupled at least to the energy storage interface. Optionally, the controllable driver 607 may be coupled to the power input 601 independently of the controllable charger 605. This optional coupling is shown with a dashed arrow in figs. 6 and 7. The idea is that electric energy delivered out of the power output may come from one or more external sources 602 or 603, or it may come from the rechargeable energy storage 604. There may be more than one controllable driver 607, for example if the device in question is a lighting driver (in fig. 6) or luminaire (in fig. 7) with two or more channels, each with a driver of its own. Additionally or alternatively, any individual driver may have one or more outputs, driving one or more actuators or sets of actuators. For simplicity, the following description speaks of a single controllable driver in the case of figs. 6 and 7.

If said optional direct coupling from the power input 601 to the controllable driver 607 does not exist, electric energy from external sources may flow to the controllable driver 607 through the controllable charger 605, bypassing the rechargeable energy storage 604. If said direct coupling is there, the controllable driver 607 is assumed to be controllable with respect to where (from the power input 601 or from the energy storage interface) it draws the electric energy from that will eventually flow out of the power output.

There are few requirements concerning the physical implementation of the controllable driver 607. In its very simplest form, particularly if said optional direct coupling from the power input 601 to the controllable driver 607 does not exist and if the controllable charger 605 comprises the necessary switching and regulating circuitry, the controllable driver 607 may be a mere conductive coupling from the controllable charger 605 to the power output and, hence, not actually controllable at all. On the other hand, in other cases the controllable driver 607 may comprise for example an advanced LED driver with the necessary circuitry for ensuring an accurately controllable amperage of the current that should be directed out of the power output. For the purposes of the present description, it suffices to assume that the part described here as the controllable driver 607 fulfils the appropriate role in determistically determining from where (from the power input 601 or from the energy storage interface) comes the electric energy that will eventually flow out of the power output.

In the embodiment of fig. 7, also the one or more actuators 606 are parts of the device itself. In the common parlance of the technical field of lighting, the device of fig. 6 could be called an intelligent driver device, while the device of fig. 7 could be called an intelligent luminaire. If the actuators 606 are other than light sources, these designations change accordingly.

The devices of figs. 6 and 7 comprise a data input 608 for receiving control information. As already mentioned above in the description of fig. 4, the data input 608 is a concept rather than a physical part and may physically comprise for example one or more connectors and/or receivers for receiving control information in wired or wireless form from one or more sources. Coupled to the data input, the controllable driver 607, and the controllable charger 605 is a control system 609 that may comprise, for example, one or more microprocessors and/or microcontrollers and the associated memory capacity for storing at least executable programs and run-time data.

In figs. 6 and 7, a difference is made between remotely originated control information and locally originated control information. Correspondingly, the data input 608 is here shown to be for receiving remotely originated control information, sources of which may be for example an external data network 610 and a remotely located controller device 611. In figs. 6 and 7, there is separately shown a (conceptual and optional) local user interface 612, which may comprise, for example, sensors that are directly connected to the control system 609. If there is a remotely located controller device 611, it may further be controllable through one or more user interface devices 613. As an example, the remotely located controller device 611 may be an application controller of a lighting system located in an instrumentation cabinet somewhere in a service space of the building.

To make the device of fig. 6 or fig. 7 operate according to the principles explained earlier with respect to figs. 4 and 5, the control system 609 is configured to make the controllable charger 605 deliver charging energy out through the energy storage interface at a variable rate selected at least on basis of control information received through the data input 608. Additionally, the control system 609 is configured to make the controllable driver 607 the ways in which it draws electric energy to deliver energy through the power output, at least on basis of the control information.

If the controllable driver 607 is coupled to the power input 601 independently of the controllable charger 605, the control system 609 may be configured to make the controllable driver 607 select rates of drawing electric energy from said power input 601 and from the energy storage interface on basis of said control information.

The above-described operation of the control system 609 takes place continuously or regularly, irrespective of whether any disturbance in receiving electric energy from an external source would forcibly make the rechargeable energy storage 604 the only available source of electric energy. This is a significant difference to previously known emergency lighting, in which a decision to direct electric energy from a rechargeable energy storage to a power output is forcibly taken in a situation where electric energy cannot be normally received from an external source like the AC grid.

Also, the control system 609 may be configured to execute the actions described above based on evaluating, against one or more predefined criteria, how advantageous or recommendable it is to use electric energy from one or more external sources. Examples of such evaluating are described in the following.

The control system 609 may be configured to receive, as the control information defined above, information indicative of time averaged supply relative to demand of electric energy in an AC grid 602 to which the power input 601 is coupled. Time averaged supply relative to demand is a different thing than momentary supply relative to demand. The operator of an AC grid may collect, in advance, orders and commitments from buyer and seller entities indicating how much electricity they will consume or produce during certain fixed intervals like hours. Based on the received information, the operator fixes, in advance, quotas for the participating entities and the price of electric energy per each interval. As the quotas fixed in advance stay the same throughout each interval, their magnitudes (and the resulting price fixed per interval) reveal the time averaged supply relative to demand. Consequently, in such systems, the price of electricity per interval can be used as control information indicative of time averaged supply relative to demand.

If control information of the kind described immediately above is expected to be available, the control system 609 can be configured to make the controllable charger 605 deliver charging energy out through said energy storage interface at a higher rate during times when the control information indicates relatively larger supply of electric energy in the AC grid 602. In other words, when there are ample amounts of electric energy available (and, consequently, it is most probably cheap), the controllable charger 605 may charge the rechargeable energy storage 604 more. Correspondingly, the control system 609 can be configured to make the controllable charger 605 deliver charging energy out through the energy storage interface at a lower rate during times when the control information indicates relatively smaller supply of electric energy in said AC grid. In other words, when electric energy is scarce in the external grid (and, consequently, it is expensive), the controllable charger 605 may charge the rechargeable energy storage 604 less.

The control system 609 may be configured to receive, as said control information, information indicative of a currently actual relative balance of renewable and non-renewable energy available at the power input 601. As the weather changes, the relative amount of electric energy produced renewably, like at solar panel farms and wind turbines, changes accordingly. It is recommendable to use "good" or "green" (i.e. renewably produced) electric energy to charge the rechargeable energy storage 604 and replace (at least some of) the externally received energy with energy discharged from the rechargeable energy storage 604 when predominantly "bad" (i.e. non-renewably produced) electric energy is available.

Said information indicative of a currently actual relative balance of renewable and non-renewable energy available at the power input 601 may come from the operator of an AC grid who collects this kind of information from producers. Additionally or alternatively, that kind of information may come from sensors the signal of which indicates the current production level of a local solar panel 603.

If control information of the kind described immediately above is expected to be available, the control system 609 can be configured to make the controllable charger 605 deliver charging energy out through said energy storage interface at a higher rate during times when the control information indicates relatively larger amount of renewable energy available at said power input 601. Correspondingly, the control system 609 can be configured to make the controllable charger 605 deliver charging energy out through said energy storage interface at a lower rate during times when said second information indicates relatively smaller amount of renewable energy available at the power input 601.

The control system 609 may be configured to receive, as said control information, information indicative of a power-balance-dependent AC frequency in an AC grid 602 to which the power input 601 is coupled. As already explained earlier, information indicative of a power-balance-dependent AC frequency in an AC grid means essentially information about momentary supply relative to demand of electric energy in the AC grid. Contrary to time averaged supply relative to demand of electric energy in an AC grid, maintaining the momentary balance between supply and demand benefits from the ability of electricity-producing and electricity-consuming entities to quickly adapt their operation, i.e. to operate as frequency-controlled power reserves. Information indicative of the power-balance-dependent AC frequency may come from the operator of the AC grid. Additionally or alternatively, every entity coupled to the grid may themselves monitor the AC frequency to detect changes.

If control information of the kind described immediately above is expected to be available, the control system 609 can be configured to reduce a rate at which the controllable driver 607 and/or the controllable charger 605 draws electric energy in response to said control information indicating a decreasing AC frequency in said AC grid 602. Correspondingly, the control system 609 may be configured to increase a rate at which the controllable driver 607 and/or the controllable charger 605 draws electric energy in response to said third information indicating an increasing AC frequency in said AC grid 602.

If, as described above, the control system 609 makes the controllable driver 607 decrease or increase the rate at which it draws electric energy from the AC grid, a natural consequence (if nothing is done to compensate) is a corresponding reduction or increase in the rate at which the controllable driver 607 delivers electric energy to the power output. If, as in the example most reverted to here, the actuator(s) driven is/are light sources, the result is a corresponding reduction or increase in the amount of light produced. In general, the result is a corresponding reduction or increase in the effect that the actuator(s) driven by the device of fig. 6 - or the actuator (s) included in the device of fig. 7 - is/are to produce. This may cause inconvenience to users.

To reduce the disadvantageous effects to users, compensating action may be taken. The control system 609 may be configured to balance an implemented reduction or increase in the rate at which the controllable driver 607 draws electric energy by making the controllable driver 607 correspondingly increase or reduce a rate at which it draws electric power from the energy storage interface, i.e. from the rechargeable energy storage 604.

Using devices like that of fig. 6 or fig. 7 as nodes, it is possible to construct a building automation network. Such a building automation network comprises a plurality of devices of the kind described above and, coupled to the energy storage interface of each of the plurality of devices, a respective rechargeable energy storage. The last-mentioned may be called a device-specific battery for more straightforward reference.

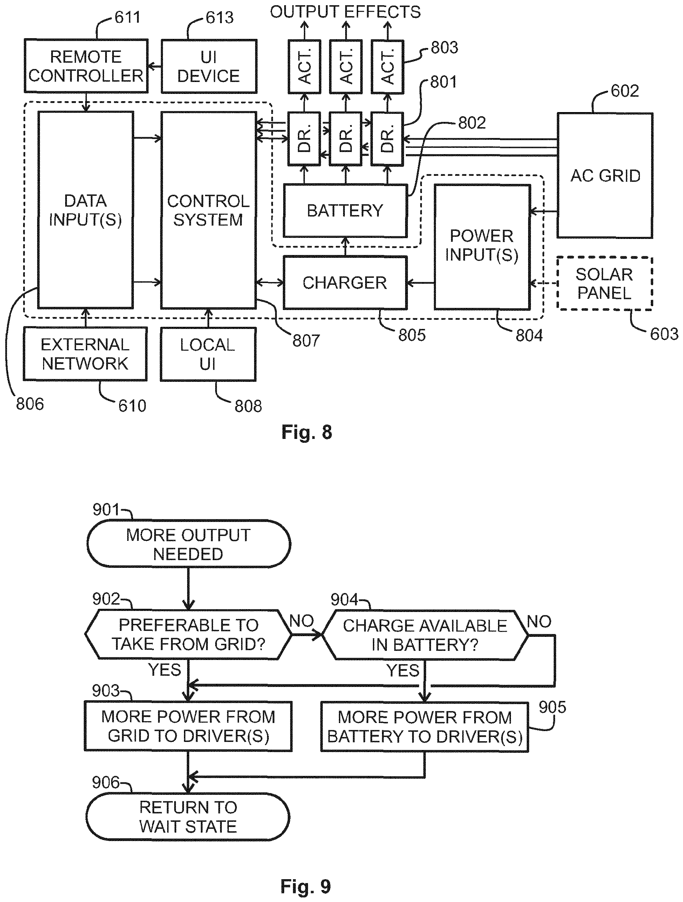

Fig. 8 illustrates another possible way of constructing a building automation network. The building automation network of fig. 8 represents a slightly more centralized approach, in which intelligence (in the form of a control system), a rechargeable energy storage and a controllable charger are common to a plurality of node devices. Using a lighting system again as a non-limiting example of a building automation network, the node devices 801 may be LED drivers and the corresponding actuators 803 may be LED light sources.

According to the principle pertinent to fig. 8, the building automation network comprises a plurality of node device 801 that constitute at least one group. Being called node devices means that each of them is configured to operate as a node of the building automation network. Constituting a group means that, among others, the building automation network comprises a group-specific rechargeable energy storage, which in the following may be called a group battery 802 for short.

Each of the node devices 801 of the group comprises a node's power input, such as an AC grid connection for example, for receiving electric energy from an external source 602. Here the external source 602 means a source of electric energy external to the group. Additionally, each of the node devices 801 of the group comprises a node's reserve power input for coupling to the group battery 802. Further, each of the node devices 801 of the group comprises a node's power output for delivering energy to a respective actuator 803 for producing an output effect in the building automation network, as well as a controllable driver coupled to the respective node's power input, node's reserve power input, and the node's power output. The controllable driver of such a node is configured to selectively draw electric energy from the respective node's power input and/or the respective node's reserve power input to deliver electric energy through the respective node's power output.

The building automation network comprises a group-specific power input 804 for receiving electric energy from the external source 602. In fig. 8, the node devices 801 have their power inputs coupled to the external source 602 independently of the group-specific power input 804, but they could have their power inputs coupled to the external source 602 also through the group-specific power input 804. An optional alternative external source of electric energy is shown in fig. 8 in the form of a solar panel 603. If one or more such alternative sources are available, there could be - although not shown in fig. 8 - couplings from the alternative external source (s) to at least some of the node devices 801 as well, either directly or through the group-specific power input 804.

The building automation network of fig. 8 comprises a group-specific energy storage interface for coupling to the group battery 802, as well as a group-specific controllable charger 805. In fig. 8, the group-specific energy storage interface comprises both the interface between the group-specific controllable charger 805 and the group battery 802 and the interface(s) between the group battery 802 and the node devices 801. The group-specific controllable charger 805 is configured to controllably convert energy received through the first group-specific power input 804 into charging energy delivered out through the first group-specific energy storage interface. In other words, the group-specific controllable charger 805 is capable of controllably charging the group battery 802 with electric energy received from the external source(s) 602 (and 603).

The building automation network comprises a data input 806 for receiving control information. What was said above concerning the data inputs 608 of node devices like that of fig. 6 or fig. 7 is similarly applicable to the data input 806 of the building automation network of fig. 8. Coupled to the data input 806, to the respective controllable driver in each node device 801, and to the group-specific controllable charger 805 is a control system 807 that may comprise, for example on or more microprocessors and/or microcontrollers and the associated memory capacity for storing at least executable programs and run-time data.

In the embodiment of fig. 8, the group-specific control system 807 is comparable to the device-specific control system 609 of figs. 6 and 7 in the sense that it is configured to make the group-specific controllable charger 805 deliver charging energy out through the group-specific energy storage interface (i.e. charge the group battery 802) at a variable rate selected at least on basis of control information received through the data input 806. Also, the group-specific control system 807 is configured to make the respective controllable driver in each node device 801 select rates of drawing electric energy from the respective node's power input and from the respective node's reserve power input at least on basis of said control information.

Similar to the embodiments of fig. 6 and fig. 7 earlier, this operation of the group-specific control system 807 differs from any previously known control logic of an emergency lighting system in which a centralized battery could supply emergency luminaires with electric energy during a blackout in the external AC network. The aim in charging the group battery 802 is not necessarily to maintain it full (i.e. at best possible readiness for emergency operation) but to achieve the most favourable balance between energy that the node devices 801 draw from external sources and energy that they draw from the group battery 802, which favourability is evaluated based on the information that the group-specific control system 807 receives through its data input. Another way of characterising said difference is to say that the group-specific control system 807 makes and implements decisions about drawing the energy currently needed for consumption in the actuators 803 from either the external source(s) 602 (and 603) or the group battery 802 (also) during times when energy is, as such, available from both.

The node devices 801 are not necessarily all equal to each other regarding, for example, their consumption of energy during normal operation. One possible way in which the group-specific control system 807 may execute its operation in accordance with the principles above is such where it selects, which of the node devices 801 should draw electric energy from the external source(s) 602 (and/or 603) and which of them should draw electric energy from the group battery 802. For example, at times when it is less preferable to use externally received electric energy, the group-specific control system 807 may make one or more such node devices use externally received electric energy that only consume very low power while simultaneously making one or more such node devices use electric energy from the group battery 802 that consume more power.

A building automation system that follows the general approach shown in fig. 8 may have its node devices 801 divided into more than one group. Each such group may have its own group battery. These may be charged with a common controllable charger, or each group may have its own group-specific controllable charger. If a common control system is responsible for controlling all such groups, it may apply many of those principles that were described above with reference to node devices of distributed intelligence, like the node device of figs. 6 and 7. For example, the control system may dynamically decide, which group(s) should keep its group battery charged at least to a minimum level to prepare for possible emergency operation, while simultaneously allowing one or more other groups to operate on battery power despite their batteries becoming more depleted.

Fig. 9 illustrates an example of a method that could be executed by any of the control systems 609 or 807 of figs. 6, 7, or 8. The method of fig. 9 begins at step 901, in which the control system receives control information indicating that more output is needed from one or more of the controllable drivers that operate under its control. As a non-limiting example, the received control information may come from a light switch, from a movement detector, from a daylight harvesting sensor, and/or from a preprogrammed machine-readable timetable. In such a case, the control system should decide whether the required additional output should, under the current conditions, be generated with electric energy received from an external source or whether it is more preferable to generate the required additional output with electric energy previously stored in a locally available rechargeable energy storage.

Step 902 represents the control system applying at least one predefined decision rule or criterion to evaluate, whether generating the required additional output with electric energy received from an external source is currently a preferable solution. A simple example of the evaluation in step 902 is such where the control system compares the current price of electric energy in the external grid to a predefined limit. As explained earlier in this text, the current price is an indicator of time averaged supply relative to demand of electric energy in an AC grid. The control system may have received pricing information automatically from a source in the internet, for example, and it may have been programmed to apply some fixed price level as a limit. If the current price is below the limit, indicating a relatively high time averaged supply of electric energy in the AC grid, the control system may proceed to step 903 in which it commands the appropriate driver to increase its output with electric energy received from the external grid. More elaborate decision criteria could be applied in step 902, including but not being limited to examining, whether the currently available electric energy in the AC grid meets or exceeds a predefined minimum relative amount of renewable production.

If the evaluation at step 902 results in a negative outcome, the execution of the method if fig. 9 moves to step 904. As taking the required additional electric energy from the external grid was not deemed preferable at step 902, it would be more preferable to take it from the locally available rechargeable energy storage, called the battery for short. However, it is not advisable or even not possible to take the required additional energy from the battery if the battery does not have enough charge, and/or if the charge currently in the battery must be allocated for possible emergency use according to some further decision criterion. For this reason, step 904 comprises a check of the availability of electric energy in the battery. Whether a currently known state-of-charge is sufficient, can be evaluated, for example, by comparing to records of previously occurred use: if similar requests for additional output were received on other days at the same time of the day, how much additional energy was then consequently consumed before the required output again changed?

A positive finding at step 904 results in the control system commanding the appropriate driver to increase its output with electric energy drawn from the battery, as shown by step 905 in fig. 5. A negative finding meant that, even if not most preferable, the required additional electric energy must in any case be taken from the external grid, so there occurs a transition to step 903 instead. In both cases, having resulted in the making and implementation of a decision, the execution of the method returns to a wait state at step 906.

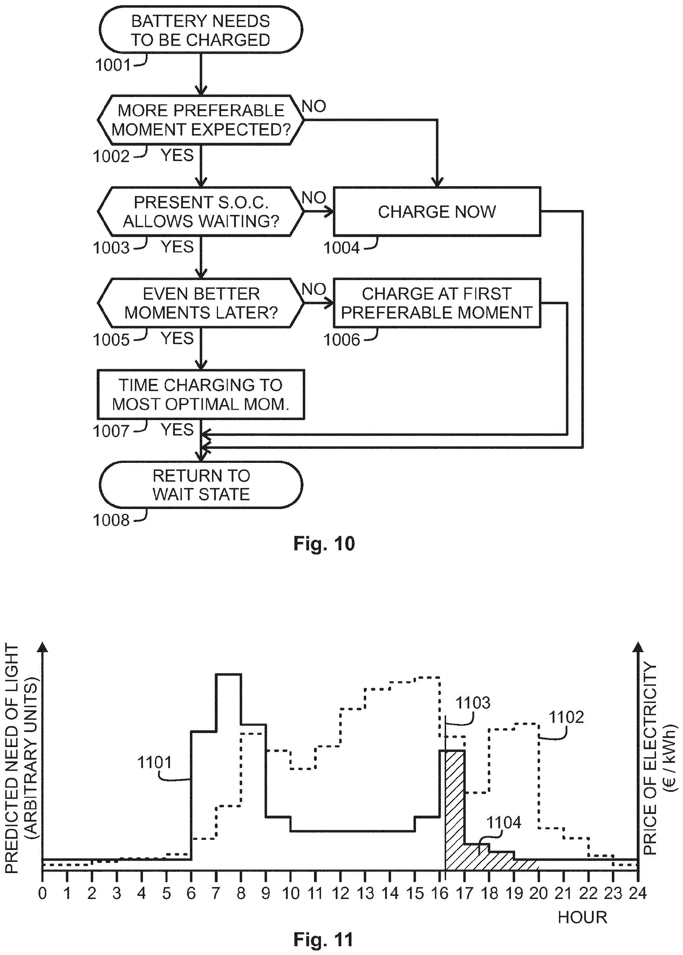

Fig. 10 illustrates an example of a method that could be executed by any of the control systems 609 or 807 of figs. 6, 7, or 8. Fig. 10 may be looked at together with fig. 11, which shows an arbitrary example of a predicted need of light (continuous curve 1101) and the known price of electric energy in an AC grid (dashed curve 1102) during a cycle of 24 hours. The control system may be aware of the predicted need of light for example based on collected records of how much light has been used recently during similar cycles of 24 hours. The control system may be aware of the price of electric energy if it has received the necessary information from a source on the internet, for example. As explained earlier already, the current price is an indicator of time averaged supply relative to demand of electric energy in an AC grid.

As seen in fig. 11, a relatively large amount of artificial light will be needed during the morning and late afternoon hours, as less natural light will come through windows. In the example case shown in fig. 11, electric energy is relatively expensive towards the late afternoon but relatively cheap in the morning. In such a case, the control system could deem it to be preferable to primarily use electric energy from the external grid in the morning and increase the relative proportion of electric energy drawn from the battery towards the afternoon.

The method of fig. 10 begins at step 1001, in which the control system notices that a remaining charge of the battery (or one of the batteries, if in the case of fig. 8 there are many groups and, respectively, many group batteries) has fallen below a predetermined limit and, consequently, the battery would need charging. One possible way in which the control system may receive such information involves a state-of-charge measurement taken by a corresponding battery management system implemented as a part of the battery, a part of the respective controllable charger, or as a part of the control system itself. As an illustrative example, we may assume that this triggering information comes to the knowledge of the control system at 16:10 (see vertical line 1103 in fig. 11).

A straightforward choice would be for the control system to decide about immediately commencing the charging, and to instruct the controllable charger accordingly. However, in fig. 10 it is assumed that the control system checks, at step 1002, whether - based on available information - it is probable that a more preferable moment for charging the battery will come in some foreseeable future. The price graph 1102 in fig. 11 shows that the price of electric energy is relatively high at the moment marked with the vertical line 1103 but falls significantly for the next hour, between 17 and 18 o'clock. However, electric energy will again be relatively expensive from 18 to 19 o'clock and from 19 to 20 o'clock, but very much less expensive after 20 o'clock. Already the known lower price between 17 and 18 o'clock results in a "yes" at step 1002, so the method proceeds to step 1003.

At step 1003, the method involves checking, whether - again based on available information - it is probable that the known state-of-charge of the battery is sufficient for postponing the planned charging. Assuming that the control system had previously intended to continue taking electric energy from the battery by the amount shown with a hatched area 1104 in fig. 11, it should check, whether this much additional energy can still be discharged from the battery without violating some other rules, like a possible requirement of minimum maintained charge for emergency operation, for example. If this evaluation ends in "no" at step 1003, or if already at step 1002 no more preferable charging moments were found in the foreseeable future, the charging of the battery begins immediately according to step 1004.

A "yes" result in step 1003 means that battery-powered operation can still be continued, waiting for the optimal moment for charging. In fig. 10, step 1005 involves a further check, whether the known remaining charge in the battery could be enough until an even better charging moment - here, until 20 o'clock when the price of electricity falls even lower than between 17 and 18 o'clock. A "no" result at step 1005 means that either no such more preferable moments are expected or the remaining charge in the battery would not allow waiting until then. In such a case the method proceeds to step 1006 and sets the planned charging to begin at the first preferable moment, i.e. at 17 o'clock. A "yes" result at step 1005 would cause a transition to step 1007, in which the planned charging would be set to begin at the known most preferable time later, i.e. at 20 o'clock.

The approach explained above concerning the selection of an optimal moment for charging may be described so that the control system 609 or 807 is configured to predictively select, on basis of control information received through the data input 608 or 806, an optimal time interval for the controllable charger 605 or 805 to convert energy received through the power input 601 or 804 into charging energy delivered out through the energy storage interface. Also, the control system 609 or 807 is configured to make the controllable charger 605 or 805 actually deliver charging energy out through the energy storage interface during such a predicted optimal time interval.

A method that implements the principles explained above could be characterized so that, for delivering electric energy for use in one or more actuators of a building automation network, it comprises selecting between electric energy from one or more external sources and electric energy from a local rechargeable energy storage also when electric energy is readily available from both. The method comprises evaluating a remaining amount of electric energy in the local rechargeable energy storage and deciding how (when, and at what rate; also - if multiple external sources are available - from which external source) to recharge the local rechargeable energy storage with electric energy from the one or more external sources. As basis of said deciding, there is used information indicative of an estimated consumption of electric energy by said one or more actuators of the building automation network during an estimation period to come. Additionally or alternatively, as basis of said deciding there can be used information indicative of one or more characteristics of the electric energy that will be available from said one or more external sources during said estimation period to come. Examples of such characteristics include, but are not limited to, a time-averaged relation between supply and demand of electric energy in an external grid; balance of renewable and non-renewable energy available from said one or more external sources; and power-balance-dependent AC frequency in an external AC grid.

For the purposes of executing a method of the kind characterized above, several possibilities exist for acquiring the information indicative of an estimated consumption of electric energy by said one or more actuators of the building automation network during an estimation period to come. For example, one may use collected (and possibly averaged) data of previously occurred consumption under similar circumstances, like similar times of day, similar days of the week, similar weather conditions, similar observed patterns of user behaviour, and/or the like. Additionally or alternatively, one may use planning data resulting from intentional planning of how the building automation network is to be used during the estimation period to come. Additionally or alternatively, one may obtain actual detection data of how the actuators of the building automation network are currently used and extrapolate therefrom, possibly taking into account supporting information like measured temperature, measured amount of ambient light, and/or the like.

Similarly, several possibilities exist for acquiring information indicative of one or more characteristics of the electric energy that will be available from said one or more external sources during said estimation period to come. For example, one may use preparatorily announced data of the price of electric energy as an indicator of a time averaged relation between supply and demand. Additionally or alternatively, one may use weather forecasts as indicators of the availability of renewably produced energy during the estimation period to come. Additionally or alternatively, one may use collected (and possibly averaged) data of previously occurred availability and characteristics of electric energy under similar circumstances, like similar times of day, similar days of the week, similar weather conditions, and/or the like.

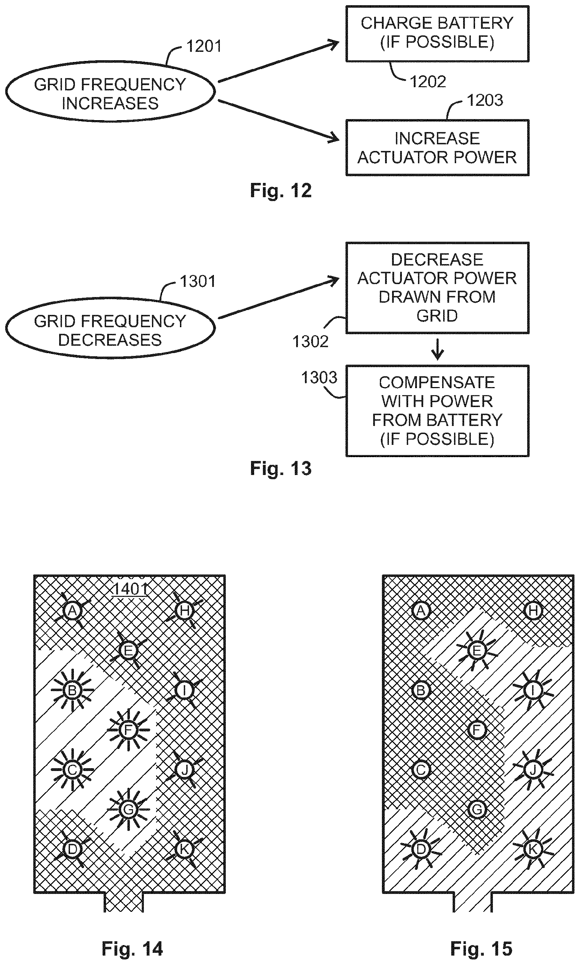

Figs. 12 and 13 are state diagrams that illustrate exemplary operation of a control system 609 or 807 in a situation where the control information is indicative of a power-balance-dependent AC frequency in an AC grid 602 to which the power input 601 or 804 is coupled. In fig. 12, the triggering incident 1201 is the reception of control information indicating an increasing AC frequency in the AC grid 602. From the viewpoint of fig. 12, it is immaterial whether this means that the AC frequency of the grid has been at its nominal value and now threatens to become unacceptably high or that the AC frequency has been unacceptably low and now begins to recover towards the nominal value; the reaction of the control system may work into the same direction in both cases. Fig. 12 shows two possible reactions; the control system may implement none, one, or both.

The first reaction 1202 is to increase a rate at which the controllable charger 605 or 805 draws electric energy from the external grid. If the triggering incident 1201 meant that the AC frequency in the grid now threatens to rise unacceptably from its nominal value, increasing the charging rate as a first reaction 1202 means that the control system tries to help balancing the external grid: there is an overproduction/underconsumption situation across the grid, so it would be beneficial to increase consumption at least momentarily. In order to be prepared for a reaction like that shown as 1202 in fig. 12, the control system may be configured to normally maintain the local rechargeable energy storage not 100% charged but at some slightly reduced charge level so that there is room for quickly dumped excess energy from the grid. Naturally, if the triggering incident 1201 occurs when the local rechargeable energy storage was at least partly depleted already there is no need to worry about whether an increase in charging rate may be initiated.

The second reaction 1203 is to increase a rate at which one or more controllable drivers 607 or 801 draw electric energy. Again, if the triggering incident 1201 meant that the AC frequency in the grid now threatens to rise unacceptably from its nominal value, the control system 609 or 807 may decide to increase consumption in the actuators (by increasing the energy draw of one or more drivers) irrespective of whether there would be actual need: for example, the control system 609 or 807 may brighten some lights in the building even if there were currently no users who needed more light. This is justifiable because balancing the external AC grid serves a "greater good"; it may even be possible to agree with the grid operator upon some kind of compensation for such an additional consumption of power that serves to maintain balance in the grid. The principle of making one or more controllable drivers draw more electric energy at 1203 is the same irrespective of whether such a controllable driver has its power input coupled directly to the power input 601 or to the controllable charger 605, as in the latter case the increase at the controllable driver may go hand in hand with a corresponding increase in the rate at which the controllable charger 605 draws power from the external grid.

If the triggering incident 1201 meant that the AC frequency in the grid now begins to recover towards the nominal value, the situation may be one in which either the controllable driver(s) 607 or 801 or the controllable charger 605 or 805 had previously been forced to draw less power than what would actually have been needed, in order to help the external AC grid to counter an overconsumption/underproduction situation. In such a case, the possible reactions 1202 and 1203 would mean returning towards the rate of drawing power that would currently be desirable based on e.g. detected needs of users.

In fig. 13, the triggering incident 1301 is the reception of control information indicating a decreasing AC frequency in the AC grid 602. Comparable to fig. 12, it is immaterial whether this means that the AC frequency of the grid has been at its nominal value and now threatens to become unacceptably low or that the AC frequency has been unacceptably high and now begins to recover towards the nominal value; the reaction of the control system may also here work into the same direction in both cases. Fig. 13 shows two possible reactions; the control system may implement none, one, or both.

The first possible reaction 1302 shown in fig. 13 aims at quickly reducing the load that the building automation network poses to the external AC grid. Here it is assumed that at the occurrence of the triggering incident 1301 the building automation network was in an operational state in which the load it posed to the external AC grid consisted essentially of electric energy drawn by the one or more controllable drivers 607 or 801. The control system 609 or 807 is configured to, as a reaction 1302, reduce a rate at which at least one controllable driver 607 or 801 draws electric energy. Although not shown in fig. 13, the control system 609 or 807 could also be configured to react by reducing a rate at which the controllable charger 605 or 805 draws electric energy from the AC grid (if it was drawing electric energy from the AC grid at the moment).

As shown as the subsequent reaction 1303 in fig. 13, the control system 609 or 807 may be configured to balance an implemented reduction (or increase, in case of fig. 12) of a rate at which the controllable driver(s) draw electric energy by making such a controllable driver correspondingly increase (or reduce) a rate at which it draws electric power from the energy storage interface. This means that the control system may soften the impact to users. Simplified, if there is sufficient charge available in the battery at a moment when controllable lights should reduce their energy draw from the external grid, the users may be happier if their lights are not dimmed that much but the reduced energy draw from the external grid is at least partially balanced by directing some battery power to the lights.

Figs. 14 and 15 illustrate an example of a building automation network in which the preparatory responsibility for emergency operation can be dynamically decided and circulated among the devices if necessary. Fig. 14 shows a room 1401 equipped with eleven luminaires, marked with capital letters from A to K. Each luminaire may be considered to have the general composition shown earlier in fig. 6. Alternatively, one may consider the room 1401 as representing a larger space, in which eleven subsets of luminaires are installed; in such a case, each capital letter A to K would represent one subset with the general composition of fig. 8. For simplicity, only the first-mentioned example is considered in the following more detailed description, while the same way of operating could be used also in the latter example.

We may assume that the default luminaires qualified for emergency operation would be the three luminaires E, F, and G in the middle of the room as well as the two luminaires D and K close to the door. In principle, luminaires D, E, F, G, and K would thus be responsible for maintaining a sufficient level of charge in their respective device-specific batteries so that if external power was missing, they could provide a sufficient level of emergency lighting for a predetermined period. However, the luminaires of fig. 14 are configured to exchange information indicative of a state-of-charge of their device-specific batteries and to dynamically select among them, on basis of the exchanged information, one or more to serve as emergency luminaire(s). More generally, this may be characterized as the devices of a building automation system dynamically selecting among them, on basis of the exchanged information, dedicated device(s) responsible for emergency operation. Here the emergency operation is thought to be of the kind that involves using electric energy drawn from the respective device-specific battery to operate the respective actuator.

In fig. 14, luminaires B, C, F, and G are on at full brightness, while the other luminaires are only on at a very low brightness. For example, if the luminaires are equipped with presence detectors (or if they otherwise receive information indicative of actual need of light), luminaires B, C, F, and G may have detected user presence while the other luminaires have not. Here it is also assumed that a significant amount of the electric energy needed to keep luminaires B, C, F, and G at full brightness comes from their respective luminaire-specific batteries. For example, control information may have been received indicative of a relatively large time-averaged demand of electric energy in the external AC grid in relation to supply, making the respective control systems make the respective controllable drivers draw electric energy from the respective batteries instead.

At some point of time, luminaire F - which was one of the default luminaires qualified for emergency operation - notices that the remaining charge in its luminaire-specific battery threatens to fall below the minimum level required for emergency operation. It may send out corresponding messages to its nearest neighbors B, C, E, G, I, and J and ask, whether any of them may take on the responsibility for emergency operation. After having received a positive answer from luminaires E, I, and J, luminaire F notices that it can continue battery-powered operation despite the falling level of remaining charge. A similar sequence of messages and decisions may occur at luminaire G, which receives positive answers from D, J, and K. If any of F or G had not received a predefined, sufficient number of positive answers, it would have decided to make its controllable charger charge its luminaire-specific battery despite the less preferable use of electric energy from the AC grid for the moment.

In fig. 15 there is an emergency: AC power from the external grid is suddenly not available at all. Luminaires D, E, I, J, and K respond by using their remaining battery power to provide emergency lighting at the predetermined level. Of these, luminaires D, E, and K do so because they had the responsibility for emergency operation by default. Also, they had confirmed their readiness for emergency operation in their positive answers to the respective messages from luminaires F and G earlier. Luminaires I and J now act as emergency luminaires because they had previously acquired this responsibility dynamically by giving a positive answer to said respective messages from luminaires F and G.

The practice explained above, i.e. dynamically selecting among devices of a building automation network, on basis of exchanged information, dedicated device(s) responsible for emergency operation, is yet another way of optimizing the use of electric energy. Despite the fact that some of the default emergency luminaires used significant amounts of battery power during normal conditions, the system as a whole did not need to resort to drawing more electric energy from the external grid at times when that was not preferable. In the case of figs. 14 and 15, once the respective control systems receive control information indicative of more preferable drawing of electric energy from the AC grid, they may all make the respective controllable chargers replenish the charge in the respective local batteries. Further messages exchanged between the devices may then bring the system as a whole to its initial state with the default distribution of responsibility for emergency operation.

A more elaborate way of applying the same principle, i.e. dynamically selecting among devices of a building automation network, on basis of exchanged information, dedicated device(s) responsible for emergency operation, may be based on said exchanged information indicating an extent to which each device may take on the responsibility for emergency operation. In the example of figs. 14 and 15 above, being the default luminaires qualified for emergency operation would mean that luminaires E, F, G, D, and K would initially have 100% responsibility for emergency operation. In other words, if nothing else happened, they would have enough charge in their luminaire-specific batteries to cooperatively maintain 100% of the required emergency level illumination in the space shown in fig. 14 for 100% of the required emergency lighting time. If then luminaire F notices that the remaining charge in its luminaire-specific battery threatens to fall below the level required for full emergency operation, it may send out corresponding messages to its nearest neighbors B, C, E, G, I, and J and ask, to which extent any of them may take on the responsibility for emergency operation.

As an illustrative example, luminaires B, C, and G could respond by announcing readiness for a readiness for 50% emergency operation, while luminaires E, I, and J could respond by announcing readiness for 90 % emergency operation. Luminaire F could then ask its neighbours to take on the emergency responsibility to the extent they announced. If shortly thereafter there would occur an emergency, luminaires B, C, and G would keep their lights on at a lower emergency level (corresponding to their previously announced 50% readiness) and luminaires E, I, and J would keep their lights on at a higher emergency level (corresponding to their previously announced 90% readiness) . None of the luminaires B, C, E, F, G, I, or J would need to maintain full emergency level, but as there are more of them than the minimum number of default emergency luminaires that would be needed to provide the full required emergency level, together the level of illumination in the space would still remain sufficient and fulfil the requirements of emergency lighting for the whole required period of time.

Artificial intelligence in the form of machine learning may be added to the control system to make it learn from feedback that reflects the effect of its previously taken control decisions. As an example, the control system may receive feedback indicative of how its previously taken control decisions affected the accumulation of the electricity bill. A machine learning algorithm may make the control system take slightly different kinds of decisions in similar initial situations at different times and then compare the results afterwards. Based on which decision produced the most advantageous results the control system may then tune its decision-making rules so that such decisions would be more favourable in the future.

It is obvious to a person skilled in the art that with the advancement of technology, the basic idea of the invention may be implemented in various ways. The invention and its embodiments are thus not limited to the examples described above, instead they may vary within the scope of the claims.

## Claims

1. A device configured to operate as a node of a building automation network, the device comprising:
- a power input (601) for receiving electric energy from one or more external sources (602, 603),
- an energy storage interface for coupling to a rechargeable energy storage (604),
- a controllable charger (605) coupled to said power input (601) and to said energy storage interface and configured to controllably convert energy received through said power input (601) into charging energy delivered out through said energy storage interface,
- a power output for delivering electric energy to an actuator (606) for producing an output effect in said building automation network,
- a controllable driver (607) coupled to said energy storage interface and to said power output, and configured to selectively draw electric energy from said energy storage interface to deliver energy through said power output,
- a data input (608) for receiving control information, and
- a control system (609) coupled to said data input (608), to said controllable driver (607), and to said controllable charger (605),
**characterized in that** the control system (609) is configured to:
- make said controllable charger (605) deliver charging energy out through said energy storage interface at a variable rate selected at least on basis of control information received through said data input (608), and
- make said controllable driver (607) select ways in which it draws electric energy to deliver energy through said power output, at least on basis of said control information.

2. A device according to claim 1, wherein:
- said controllable driver (607) is coupled to said power input (601) independently of said controllable charger (605), and
- the control system (609) is configured to make said controllable driver (607) select rates of drawing electric energy from said power input (601) and from said energy storage interface on basis of said control information.

3. A device according to claim 1 or 2, wherein:
- said control system (609) is configured to receive, as said control information, first information indicative of time averaged supply relative to demand of electric energy in an AC grid (602) to which said power input (601) is coupled, and
- said control system (609) is configured to make said controllable charger (605) deliver charging energy out through said energy storage interface at a higher rate during times when said first information indicates relatively larger supply of electric energy in said AC grid (602) and at a lower rate during times when said first information indicates relatively smaller supply of electric energy in said AC grid (602).

4. A device according to any of the preceding claims, wherein:
- said control system (609) is configured to receive, as said control information, second information indicative of a currently actual relative balance of renewable and non-renewable energy available at said power input (601), and
- said control system (609) is configured to make said controllable charger (605) deliver charging energy out through said energy storage interface at a higher rate during times when said second information indicates relatively larger amount of renewable energy available at said power input (601) and at a lower rate during times when said second information indicates relatively smaller amount of renewable energy available at said power input (601).

5. A device according to any of the preceding claims, wherein:
- said control system (609) is configured to receive, as said control information, third information indicative of a power-balance-dependent AC frequency in an AC grid (602) to which said power input (601) is coupled,
- said control system (609) is configured to reduce a rate at which at least one of said controllable driver (607) and said controllable charger (605) draws electric energy in response to said third information indicating a decreasing AC frequency in said AC grid (602), and
- said control system (609) is configured to increase a rate at which at least one of said controllable driver (607) and said controllable charger (605) draws electric energy in response to said third information indicating an increasing AC frequency in said AC grid (602) .

6. A device according to claim 5, wherein said control system (609) is configured to balance an implemented reduction or increase of the kind defined in claim 4 in the rate at which said controllable driver (607) draws electric energy by making said controllable driver correspondingly increase or reduce a rate at which said controllable driver (607) draws electric power from said energy storage interface.

7. A device according to any of the preceding claims, wherein:
- said control system (609) is configured to predictively select, on basis of said control information received through said data input, an optimal time interval for the controllable charger (605) to convert energy received through said power input (601) into charging energy delivered out through said energy storage interface, and
- said control system (609) is configured to make said controllable charger (605) deliver charging energy out through said energy storage interface during such a predicted optimal time interval.

8. A device according to any of the preceding claims, wherein said controllable driver (607) is a lighting driver configured to deliver, through said power output, current conditioned for predetermined kind of light sources.

9. A building automation network, comprising:
- a plurality of devices according to any of claims 1 to 7, and
- coupled to the energy storage interface of each of said plurality of devices, a respective rechargeable energy storage, designated in the following as the device-specific battery.

10. A building automation network according to claim 8, wherein:
- said plurality of devices are configured to exchange information indicative of a state-of-charge of their device-specific batteries, and
- said plurality of devices are configured to dynamically select among them, on basis of said exchanged information, at least one device to serve as a dedicated device responsible for emergency operation that involves using electric energy drawn from the respective device-specific battery to operate the respective actuator.

11. A building automation network according to claim 8, wherein the respective control system of each of said plurality of devices is configured to always maintain a minimum state-of-charge of the respective device-specific battery, said minimum state-of-charge being defined so that it is sufficient to keep the respective actuator operating at a predefined minimum level for a predefined time.

12. A building automation network, wherein:
- the building automation network comprises a plurality of node devices (801) constituting at least a first group, each of said node devices (801) being configured to operate as a node of the building automation network,
- the building automation network comprises a first group-specific rechargeable energy storage, designated in the following as the group battery (802),
- each node device (801) in said first group comprises:
- - a node's power input for receiving electric energy from an external source (602),
- - a node's reserve power input for coupling to said group battery (802),
- - a node's power output for delivering electric energy to an actuator (803) for producing an output effect in said building automation network, and
- - a controllable driver coupled to said node's power input, to said node's reserve power input, and to said node's power output, and configured to selectively draw electric energy from said node's power input and/or said node's reserve power input to deliver electric energy through said node's power output;
**characterized in that**:
- the building automation network comprises:
- - a first group-specific power input (804) for receiving electric energy from said external source (602) and
- - a first group-specific energy storage interface for coupling to said group battery (802);
- - a first group-specific controllable charger (805) coupled to said first group-specific power input (804) and to said first group-specific energy storage interface and configured to controllably convert energy received through said first group-specific power input (804) into charging energy delivered out through said first group-specific energy storage interface,
- the building automation network comprises a data input (806) for receiving control information,
- the building automation network comprises a control system (807) coupled to said data input (806), to the respective controllable driver in each node device (801) of the first group, and to said first group-specific controllable charger (805),
- the control system (807) is configured to:
- - make said group-specific controllable charger (805) deliver charging energy out through said first group-specific energy storage interface at a variable rate selected at least on basis of control information received through said data input, and
- - make the respective controllable driver in each node device (801) of the first group select rates of drawing electric energy from the respective node's power input and from the respective node's reserve power input at least on basis of said control information.
